# EUROPEAN PATENT SPECIFICATION

(11) **EP 3 200 958 B1**
(45) Date of publication and mention of the grant of the patent: **31.10.2018**
(21) Application number: 15723573.0
(22) Date of filing: 13.04.2015
(51) Int. Cl.: G05D 1/00, B25J 5/00, B25J 9/16, B25J 13/00, B25J 13/06, B25J 13/08, B25J 19/02, G05D 1/02

(54) **MOBILE SERVICE ROBOT CAPABLE OF COLLECTING BIOLOGICAL AND SOIL SAMPLES FOR ENVIRONMENTAL MONITORING**
MOBILER DIENSTROBOTER ZUR ENTNAHME BIOLOGISCHER UND BODENPROBEN ZUR UMWELTÜBERWACHUNG
ROBOT DE SERVICE MOBILE CAPABLE DE COLLECTER DES ÉCHANTILLONS BIOLOGIQUES ET DE SOLS POUR LA SURVEILLANCE DE L'ENVIRONNEMENT

(30) Priority: 02.10.2014 PT 14107937
(43) Date of publication of application: 09.08.2017
(73) Proprietor: Introsys - Integration for Robotic Systems-Integraçao de Sistemas Robóticos S.A., 2860-274 Portugal Alhos Vedros (PT)
(72) Inventor: DA SILVA GUEDES, Magno Edgar, 2910-766 Setúbal (PT); MARTINS DEUSDADO, Pedro Miguel, 2805-067 Almada (PT); BENTO RAINHO CALDEIRA, Maria Raquel, 6000-473 Castelo Branco (PT); GOMES DA SILVA, André Filipe, 2830-090 Barreiro (PT); BENTES MOITA FLORES, Luis Miguel, 2925-029 Azeitão (PT); BENTES MOITA FLORES, Nuno Manuel, 2925-610 Azeitão (PT); FIGUEIREDO SANTANA, Pedro, 2070-404 Pontével (PT); BARATA DE OLIVEIRA, José António, 2820-663 Charneca da Caparica (PT); CARDOSO MARQUES, Francisco Antero, 2825-483 Costa de Caparica (PT); MARTINS MENDONÇA, Ricardo André, 2810-098 Almada (PT); LOPES LOURENÇO, André Filipe, 2815-715 Sobreda (PT); FERREIRA MORAIS PINTO, Eduardo Manuel, 2970-190 Sesimbra (PT); GIL CORISCO, José Alberto, 2890-001 Alcochete (PT); MORAIS PORTUGAL, Luis Miguel, 2890-052 Alcochete (PT); LOPES ALMEIDA, Susana Marta, 1990-515 Lisboa (PT)
(74) Representative: Pereira da Cruz, Joao
(86) International application number: PCT/PT2015/000018
(87) International publication number: WO 2016/053126

(56) References cited:
- US-A- 4 957 622
- US-A1- 2005 192 752
- US-A1- 2010 095 799
- US-A1- 2013 340 560
- GUEDES M ET AL: "ARES-III: A versatile multi-purpose all-terrain robot", PROCEEDINGS OF 2012 IEEE 17TH INTERNATIONAL CONFERENCE ON EMERGING TECHNOLOGIES & FACTORY AUTOMATION (ETFA 2012) : KRAKOW, POLAND, 17 - 21 SEPTEMBER 2012, IEEE, PISCATAWAY, NJ, 17 September 2012 (2012-09-17), pages 1-8, XP032428165, DOI: 10.1109/ETFA.2012.6489633 ISBN: 978-1-4673-4735-8

## Description

### Technical field of the invention

The present invention falls within the field of mobile service robotics whose purpose is to assist humans in performing arduous, repetitive, costly and dangerous tasks. This invention consists of a complex robotic system with locomotion by wheels and powered by electricity. The robot comprises a set of devices, sensors, manipulators and data processing modules which allow, through artificial intelligence algorithms, computational vision and control perceive the environment, navigate and interact with it autonomously or by tele-operation. This system has as primary objective to collect soil and biological samples in estuarine environments. Given the inherent scalability and reconfiguration and reprogramming capability of the system, it allows its application in areas such as environmental monitoring, defence and security, civil protection and transport of goods and tools.

### State of the art of the invention

In the current context of strong technological development there is a growing interest in the use of automated or robotic mechanisms to assist or replace the human being in specific tasks of high degree of danger for him.

Being the primary objective to protect the human being from dangerous situations when carrying out his tasks, there are on the market many mobile service robots with handling capacity to identify, move and/or inactivate explosives. However, such systems offer some limitations when one intends to use them outside the context for which they have been designed, i.e. they do not allow reprogramming or autonomous navigation and do not include a soil drilling system.

Another objective in the use of robots is related to the exploration of inhospitable places and difficult to access. There is therefore a range of exploratory robots whose areas of operation go through places such as volcanoes, mines, disabled nuclear power plants, or other planets. However, given the high public interest of such systems, they are normally used, managed and financed by public authorities or governments, with dedicated components for use in very specific missions. As such, they do not get the product status and are not likely to be used for private or civil organizations.

The reduction of labour costs, in the present economic climate, is another reason of interest for the use of service robots. This fact is more pronounced in the agricultural sector where robots have been used in tasks such as soil preparation, pesticide spraying and harvesting of certain types of vegetables fruits. However, there is none that allows the isolated collection of soil samples in continental areas, or to explore estuarine environments collecting therein matrices of interest in the field of monitoring contaminant materials (heavy metals, radionuclides, etc.). Conventional tools for collection and sampling of soils and sediments are actuated directly or indirectly by human hand. Such is the case of drag dredgers to collect shallow estuarine sediments, or of the manual Auger lanyards for extracting cylindrical columns ("cores") of soil or sediment to a certain depth, or the percussion Auger lanyards with an auxiliary motor, used in the extraction of "cores" of soils in continental areas. The same can be said about the devices to collect organisms inhabiting the estuarine sedimentary layers, such as bivalves, as well as plant structures associated with this type of environment, as are the sea grass. In the present invention, the system allows for autonomous control of the entire process of collecting those materials, without the need for human presence in the collection site.

The patent document US4412293 refers to a system that uses an anthropomorphic robotic arm to collect not oriented cylindrical parts in containers. It may be added that the patent document US20070145650 discloses a system and method using the same robotic arm for grabbing and transporting cylindrical probes to collect concentrate samples used in metal casting processes. These processes however require that the arm lies attached to a static structure and not to a mobile robot.

The patent document EP1292517 discloses the use of a movable arm for collecting objects in containers. However, the arm can only move longitudinally along a structure which in turn is attached to the ground. The present invention integrates this manipulation capability in a mobile system capable of moving in any direction and on non-planar ground, which implies constant adjustments to coordinate transformations between the manipulation system and the manipulable objects, external to it.

Several examples of mobile manipulators can be found in the literature such as patent documents US7475745, US6113343, US8155787 and US8360178. However, unlike the present invention, none of these systems includes the capability to collect soil samples either by drilling or by drag.

As previously mentioned, reports exist in the literature of automatic tools for collecting soil samples. The patent documents US4869115 and US7216555 disclose mechanisms to collect samples in the soil superficial surface layer (5-10 cm) being therefore impossible the cataloguing by levels of depth. The patent document US4043407 refers to a drilling system for use in unstable soil, including submerged areas, while preserving the structure of the sampled soil. This is however a complex mechanism with pneumatic actuation which prevents its use in a mobile robot large enough to be easily portable to operating locations. The patent documents US3224512, US3324958, US4284150, US4316393, US4333541, US5211248, US5950741 and US6360829 also disclose single soil colours collection mechanisms that use hydraulic systems to allow drilling which also precludes its use in a robot. The patent document US5004055 also refers to a system that uses vibration to reduce soil resistance, but still requires the use of hydraulic actuators.

On a smaller format, patent documents US8573074 and EP2354438 refer sampling mechanisms of soil colours by drilling with linear actuation and electric motors. The drawback is that these systems do not include rotary motion of the drill pipe in order to reduce soil resistance and therefore decrease the energy required to perform the drilling process.

Patent documents US5394949 and US7575069 include a screw or drill rotational movement which, however, turns the soil and the capability for cataloguing levels of depth is lost.

Alternatively, the patent documents US4869115, US6766865, US7552654, US7827873 and US6016713 disclose complete soil sampling systems that can be towed by a small tractor or other agricultural vehicle. The latter still offers some interesting functionalities such as geotagging by GPS. However, these are systems designed for extraction topsoil surface which prevents their utility in collecting samples for the purpose of analysis of soil strata at variable depths. Furthermore they do not contemplate a drag system, which may be of interest both in the collection of samples of the surface layer, either in arable land or in estuarine river sediments, as of certain types of biological components of the ecosystem, such as sea grass and some invertebrates that inhabit the estuarine sedimentary platforms.

The present invention allows performing collection of estuarine sediments samples in estuarine soil using a compact, lightweight system electrically actuated that can be easily attached to a mobile robot. In addition to the linear movement, the system also associates a rotational movement in order to reduce soil resistance. The mechanism allows to drill the estuarine sedimentary platform to a selected depth by extracting a cylindrical sample (or "core"), which will be contained in sample tubes, preferably of PVC, which are inserted in and removed from the structure by means of a robotic arm installed on the robot.

Regarding the collection of biological samples of the type to which this system will be dedicated (materials fixed to sedimentary substrate not very compact) there are dredgers using suction as the one, for example, disclosed in patent document US7721472, cutting or scraping such as those disclosed in patent documents US3521386, US3608217 and US7334358, or a combination of both, such as shown in the patent document US4957622. These techniques are however specific for submerged regions, and there is no reference to automatic mechanisms for collecting biological samples by drag in estuarine environment that can be integrated into surface robotic systems.

The present invention includes the capability to comprise an apparatus that allows the collection of biological samples by drag (sea grass and bivalves). A particular feature of this mechanism, besides to be able of being integrated and actuated automatically and autonomously by a surface mobile robot is to allow the collection containers or baskets to be introduced and removed automatically by a robotic arm wherein it will use the same claw that is used to introduce and collect the sampling probes of soil samples in the drilling mechanism.

The literature also discusses other research techniques by characteristics in underground material. It is the example of the patent document US7254485. However, this system and methods discussed differ from the present invention in that the probes used include all sensors required to the collection of features and do not collect soil samples for later analysis in the laboratory, whose dimensions and resources needed to the measuring instruments prevent their outdoor use. The analysis processes, such as gamma spectrometry for radionuclide detection or multielement analysis (neutron activation, mass spectrometry, etc.) require not only exclusive operational equipment for laboratory facilities, but also a processing of samples only achievable with human means and specific laboratory equipment for drying, homogenization, chemical treatment when needed, conditioning for the measurement, etc. In addition, the system uses publicly available aerial images to determine the sampling points. The present invention also proposes to use aerial images, but once the area of operations (typically estuarine environments) is subjected to intense hydrodynamic processes that produce successive changes in their morphology, aerial images may become outdated quickly and mislead both the system as its users. In order to overcome this problem, the present invention proposes the use of an unmanned aerial vehicle, small size and equipped with a high resolution camera, that can get aerial images of the operations area at an early stage to the mission of collecting the samples.

Document US 2013/340560 discloses a mobile service robot according to the preamble of claim 1.

### Description of the Invention

The present invention consists of a mobile robotic system with all-terrain features, weatherproof and resistant to salinity and able to collect soil and biological samples in estuarine environments or where the soil is unstable. This robotic system is characterized not only by its functionality but also for its robustness both in terms of operation in hostile environments and traction capacity on muddy or unstable soil.

The system can be divided into four main modules:
1) a mobile unit responsible for navigating to the collection points;
2) an apparatus for collecting soil samples by drilling that can be attached to the mobile unit;
3) an apparatus for collecting biological samples by drag that can be attached to the mobile unit; and
4) a remote control unit that comprises the interface mechanisms of interaction with the user and remotely communicates with the mobile unit.

The sampling unit consists of a terrestrial mobile robot comprising:
a) 4 hermetically sealed compartments (14), (16), (20) and (21) comprising the power supply and all the electronic components responsible for the operation of the robot;
b) 4 wheels with studded tires of low rolling resistance, independently actuated in traction and steering (17) and (18);
c) 1 passive longitudinal **(15)** axis that allows all four wheels to be in contact with the soil at any time, even on rough ground;
d) an anthropomorphic robotic arm programmable with at least five degrees of freedom (6); and
e) a support for soil collection tools by drilling or by drag.

The mobile robot uses mostly and preferably, aluminium alloys and plastics as support and waterproofing, thereby maintaining a high durability and corrosion resistance, good thermal conductivity and reduced weight. Its construction and security elements are in accordance with Community rules related to methods and safety devices used in machines and detailed in the directive 2006/42/EC. Its size is compact enough to allow its transportation in cargo compartments of light vans.

The mobile robot is energetically autonomous, with power supply included in the system itself and able to keep it in full operation by the typical duration of a sampling mission, which is preferably 2-4 hours. The system is scalable and reconfigurable, providing for such a voltage range capable of powering sensors, actuators and typical processing units as well as communication interfaces with common protocols (including for example, USB, Serial, CAN, FireWire, Ethernet, WiFi, among others).

The system is functional in terms of collecting soil and biological samples, comprising for that an interchangeable system that allows the exchange between collection tools adapted to be used on the robot, as for example, one to drill the soil and another to collect species on the surface by drag. A robotic arm allows the introduction and collection of tubular or hexahedral receptacles on the drilling or drag tools as well as in the respective storage compartments.

The drilling tool works by linear actuation, electric driven, of a drilling element characterized by being a probe capable of containing a soil core (8A and 8B). Said drilling element has at its top an automatic coupling system (36), thereby enabling it to be inserted and removed independently by means of a robotic arm present in the mobile unit. On the drilling element is also induced a rotational movement, using an electric motor in order to reduce the soil substrate resistance during the drilling process.

The drag tool works by linear actuation, electric driven, of a dredger or perforated container (Figure 7) that will be buried between 1 cm to 5 cm in the soil at adjustable depth. Once in contact with the soil, the mobile unit performs a backward movement enabling the elements on the soil surface to pass through the dredger and to be stored therein. The dredger or perforated container is characterized by an hexahedral element open on one side for soil and biological species to enter, while the remaining are perforated in order to filter the species of interest. At its top, a special coupling (33) allows the dredger to be inserted in and removed from the drag tool autonomously by means of a robotic arm. This coupling is such that the claw (Figure 10) used by the arm to grab the above mentioned drilling elements can be used to grab the dredger.

The control unit (Figure 9) consists of a carrying case containing a robust laptop computer, a pair of configurable joysticks, a high brightness monitor, a video decoder over IP, a pair of high-gain antennas and a high performance switch. This control unit is responsible for allowing interaction between the user and the system both to control and to monitor its state. The reconfigurable joysticks allow the user to directly control (by tele-operation) the movements of the mobile unit, of a camera with motion control (if present) or of the robotic arm. The monitor displays images captured by the robot's on-board cameras to enable a comprehensive tele-operation and a wide observation of the environment surrounding the robot. These images are transmitted according to the video protocol over IP, wherein the decoder present in the control unit converts them to analog format capable of being displayed on the monitor. The switch and antennas operate in different frequency ranges and allow transmission of data between the mobile unit and the control unit.

Attached to the control unit there is a compact and portable command unit that can be easily transported by the user. This command unit allows the user to directly control at short distances (up to at least 100m) the locomotion of the mobile unit and the movements of the robotic arm. The command unit comprises an analog joystick for movement control, selectors that allow switching between arm control modes and locomotion modes of the mobile unit, an emergency stop button and a "dead man's" mechanism that prevents sending commands to the mobile unit after a period of inactivity.

### Detailed description of the invention

In order to allow its operation, the present invention comprises the following components:
a) At least one battery as a source of energy for the entire system;
b) At least one computer for processing the sensor data, performing algorithms and controlling actuators, comprising common communication interfaces between devices and peripherals;
c) If not available on the computer a serial port, the system may include at least one protocol conversion unit from Firewire to USB;
d) If not available on the computer a serial port, the system may include at least one protocol conversion unit from CAN to USB;
e) At least 4 serial ports for use by various sensors;
f) At least 8 USB ports for use by various sensors;
g) At least one wireless communications module operating in multiple frequency and respective antennas;
h) At least one global positioning unit for georeferenced location at the operation site;
i) At least one inertial measuring system consisting of gyroscopes and accelerometers in order to allow the estimation of the three-dimensional pose of the robot in real time;
j) At least a laser scanner for measuring distances in a plane laying in a variable slope support in order to allow the reading in different degrees of azimuth for obtaining three-dimensional representations of the environment surrounding the robot;
k) The said support is physically connected to a programmable operating unit capable of automatically changing in real time the slope of said support through commands sent from the computer;
l) At least a pair of cameras with synchronizable shutters, preferably to allow the capture of images in stereoscopy;
m) At least one high resolution camera capable of obtaining panoramic images or in any orientation in order to allow remote visualization of the surroundings of the robot;
n) At least one display device, preferably a monitor accessible from the outside of the robot that allows viewing relevant information about the current state of the system;
o) At least one portable wireless control device whose functionalities allow controlling basic movements of the robot by an operator up to a distance of at least 100 meters;
p) A wireless remote control unit that allows to control all system functionalities as well as to monitor its state.
q) Said control unit comprises a computer that a) performs a graphic interface for the user, b) receives and interprets motion commands from manual physical interface (e.g. joysticks) and visual (e.g. interpreting gestures).

The sampling module is divided into three main components:
- a drilling apparatus;
- a drag apparatus; and
- a robotic arm.

The drilling apparatus comprises a support structure, table and linear guides and electric motors. Its operation consisting in the vertical displacement of an element called carriage through a spindle, aided by guides placed in parallel. The carriage, in turn, comprises another motor and a quick release system, responsible for coupling the tubular receptacle and rotary motion. Its operation is similar to a common manual driller where the vertical motion is ensured by another motor. The drilling of the soil occurs by applying two types of forces on the tubular receptacle: vertical and rotational. The first is made possible by the use of an electric motor coupled to the above mentioned linear table. This, in turn, is responsible for ensuring the verticality of the applied force and for reducing the energy expenditure. The circular motion comes from the electric motor mounted on the carriage. The combination of the two types of movements ensures the efficient collection of samples in depth.

The drag apparatus comprises a support structure, table and linear guides and an electric motor. Its operation consisting in the vertical displacement of an element referred to as "carriage" by means of a spindle, aided by reinforced guides placed in parallel. Those in turn support, through multiple skids, the structure responsible for transporting the hexahedral receptacles up to the soil level. The drag for collecting species of interest occurs, after the receptacle contacting the soil, by displacement of the robotic platform. The contact with the soil is achieved by the electric motor coupled to said linear table. The displacement of the platform is obtained by locomotion motors.

Its operation consists in the vertical displacement of the elements referred to as "skids" by means of two guides placed in parallel. Those in turn support the structure responsible for transporting the hexahedral receptacles up to the soil level. Its operation consists in the vertical displacement of two pairs of elements referred to as "skids" by means of two guides, placed in parallel. The various skids support and move the structure where the hexahedral receptacles are placed during the drag.

The robotic arm allows the transport of drilling elements (probes) and sample containers between their storage locations and of the drilling or drag tools. A software module allows to define and calculate the required trajectories between locations taking into account that:
- the containers must be transported so as to reduce the risk of losing samples or that the elements fall;
- the points to introduce and remove the containers in and from the coupling elements must respect the maximum margins so as to eliminate the risk of damaging the material;
- the trajectories must be calculated collision-free, if a trajectory is not possible without collision, it must be aborted and alternatives recalculated or to reposition the mobile unit until we get a possible collision-free trajectory; and
- the trajectories must be calculated individually, at run time and according to local referential in relation to the end points and not in relation to a common global referential, since, given the dynamics of the mobile unit itself and of the soil the end points of the trajectory can vary in relation to the base of the robotic arm.

The software module uses communication interfaces common to the entire system. The trajectories are calculated automatically at runtime. The collision detection is performed using a grid of occupation that stores and updates the physical structure and pose of the robot in real time. The commands of the motors movement are performed taking into account the kinematic calculation thereof. The start and end points of trajectory are preset by the user at a preliminary stage to the mission.

The control unit is responsible for allowing to a user to remotely operate the system. The control unit consists of a hard carrying case containing a laptop computer resistant to outdoor environments, a pair of configurable joysticks, a high brightness monitor, a video decoder over IP and a wireless communications module. The joysticks are connected to the computer and are intended to send movement commands to the mobile unit, from a camera with movement control (if present), or from the robotic arm. The state of each joystick is interpreted by an algorithm running on the computer which in turn translates into movement command and sends it to the respective module via a TCP/IP connection. The computer, in addition to process the state of the joysticks, provides a graphic interface to the user so as to enable him to manage the mission by sending, for example, high level commands to the mobile unit, georeferenced routes, to make changes and reconfigurations of the system at runtime, or to check the current state of the system. A more detailed description of the graphic interface is presented below in the document. The monitor displays images captured by the robot's on-board cameras to enable a comprehensive tele-operation and a wide observation of the environment surrounding the robot. These images are transmitted according to the video protocol over IP, and the decoder present in the control unit converts the same to analog format capable of being displayed on the monitor. The wireless communication module enables transmission of data between the mobile and the control units.

The control module allows to act on the motors of the system in order to perform the movements required to perform the specific functions of the other system modules. This module is divided into two main layers: a hardware abstraction layer and a logical layer. The hardware abstraction layer contains a set of device drivers that are designed to allow interaction between the software modules and the physical components of the system. In the case of the locomotion control and operation, these device drivers implement the CANOpen protocol (DS-402) recognizable by motor controllers used in the mobile unit, providing a set of functions that allow, for example to read and to control the position, speed and torque of each motor, to switch between control modes, to reconfigure internal parameters and operating limits, etc. The logical layer comprises a set of computational processes that allow to interpret high level commands (for example, to move the mobile unit, 25m at 0.7m/s) into commands for each motor individually (for example, to move motor # 1 at 5600rpm) . To this end, this layer includes the kinematic calculation taking into account the geometry of the robot and the positioning of the motors. This layer also includes the calculation of inverse kinematics which allows from the current state of each motor to infer the displacement of the robot in a given time interval (odometry). Additionally, this layer is responsible for ensuring that all commands sent to the physical components are within operational and safety limits, as well as to provide data about the hardware state, including error and diagnostic messages. The implementation of the entire control system is made in compatibility with the ROS framework (Robot Operating System). This strategy of implementation enables to have a scalable system using a modular architecture (in graph) with different processes running in parallel and interacting with each other through common protocols, in this case TCP/IP.

The communications module implements a robust strategy for wireless data transmission in outdoor environments. This module consists of a high performance router connected to a switch which in turn creates a local network in the mobile unit to which are connected the various hardware components on board of the robot. The router connects this local network and the remote control unit through two high-gain antennas with transmission capacity in two different frequency ranges (2.4GHz and 5GHz). This dual system allows to increase the resilience of communication, increasing the capacity and transmission speed and reducing the susceptibility to interference.

Next is described the functionalities of the present invention;

### Tele-operation control

The tele-operation module allows to remotely control locomotion and functionalities via the control unit. This module is divided into two main layers: man-machine interaction layer and logic layer. The man-machine interaction layer comprises a set of physical and software components that allow the system to interact directly with the user and vice-versa. These physical devices include:
1) a set of joysticks for direct control of movements;
2) a video closed circuit composed of cameras on board of the mobile unit and a monitor in the control unit allowing the user to observe the surrounding environment to the robot;
3) a panoramic camera or with the ability to move 360° whose images are transmitted to a virtual reality device (HMD) allowing the user to have an immersive perception of the surrounding environment to the robot and to focus the observation on specific details of the environment;
4) a compact portable device for short-range control of the robot movements;
5) a camera with three-dimensional perception that allows the user to interact with the system by means of gestures; and
6) an intuitive graphic interface that allows access to all system functionalities and monitor its status.

The logic layer relates to the interpretation and conversion of data acquired by the interface into recognizable functions by the system and with the treatment and filtering of commands to ensure that these are likely to be executed with the current system configuration and safely. The logical part still makes the collection and aggregation of all system state variables and diagnostic messages in order to have access to relevant information clearly and objectively. The logic layer also includes an interpretation of gestures module whose objective is to give the user the control functionality through natural and intuitive gestures. The gesture interpretation module uses images captured by a camera with depth sensor capable of providing three-dimensional representations of the environment.

The interpretation process can be described as follows:
i. after filtering the incoherent or unrealistic sensorial data;
ii. the algorithm proceeds to the identification of the hand and respective fingers in the visual field of the sensor;
iii. track them over time; and
iv. interprets the gesture made using the spatial position of the fingers, in an N number of frames processed in i), ii) and iii).

Identification requires the user to remain in front of the device, in a range from 0.5 to 3.0 meters, and to make an initial movement with his hand (wave - moving the hand from one side to the other, or click - moving the hand toward the sensor and back again). After identification, the system stores the last N positions recorded, N can be previously parameterized. The use of a subset of frames for interpretation has the advantage of not only determine with more robustness the start and end position of the movement performed (where there has been movement) but also to eliminate punctual failures in the detection of the fingertips. Finally, the historical of the positions feeds an interpreter algorithm of movements in order to describe dynamic gestures, and the image of the hand feeds an interpreter algorithm of static gestures. So it will be possible to do a combination of gestures with movement. The interpreter of dynamic gestures analyses the distribution of positions of the point corresponding to the palm (centroid) of the hand segmented in N frames recorded by the identification algorithm described above. This distribution is then compared to a list of distributions previously configured and saved in memory. The comparison which obtains a smaller difference and that is below a predetermined T value is considered for determining the gesture executed. The interpreter of static gestures uses the relative position of each finger with the palm (centroid) of the hand. Both values are provided by the hand identification algorithm described above. Additionally, it is also used the counting of visible fingers, i.e. which are above a Euclidean distance D previously set, of the palm of the hand. Consequently, the values related to the counting of the visible fingers and their positions in space are used to feed a descriptor that identifies the gesture executed, such as the previous algorithm, in comparison with a number of preconfigured and saved in the memory descriptors. The interpreted gestures are subsequently used to move the mobile unit or the robotic arm in accordance with the mission context.

### Detection of obstacles and autonomous navigation

To navigate in the environment between collection points, the robot relies on the plan generated by the human operator with the support of aerial images. However, this plan is recurrently inappropriate given the variations in terrain morphology during the course of the mission (e.g. rising tides), the operator's inability to accurately determine the safest locations to navigation and to the failures of the planned route recorded through the aerial images in relation with the real positions on the ground. For these reasons, the navigation system uses a local navigation device thus avoiding any not expected obstacle to navigation. The local navigation relies on regular representations of the environment built and maintained in a probabilistic manner by the robot at each new reading of its sensors, in particular the laser and the binocular vision system. For a correct update of those representations, the robot needs to estimate its location in the world; to this end is used a global positioning system with centimetre accuracy (RTK-GPS), an inertial system (IMU) and a mechanism to record the odometry of the robot from the movement and direction of the four wheels. All these information sources are merged into a probabilistic estimator of the robot pose. About the three-dimensional representation of the environment is then possible to estimate the cost of navigation in each ground portion. The cost of navigation is calculated by taking into account the presence of water in the environment and the presence of non-traversable obstacles.

The presence of water is determined by the absence of reflection of the laser beams emitted to the environment while the presence of obstacles is shown by the geometric relationship between points on the ground. For example, an abrupt change in ground height indicates a protrusion difficult to climb. To determine if the protrusions are not actually vegetation and, therefore, no obstacle to navigation, the robot analyses the local distribution of 3D information collected by the sensors and compares it with the typical distribution of vegetation. Based on the distribution of obstacles in the environment the robot then plans its route towards the next point of interest in accordance with the plan generated by the operator. If this point is inaccessible the robot informs the operator and moves to the next point and so on. The route planning is carried out taking into account an ideal model of the kinematics and morphology of the robot, so only achievable movements are planned.

### Mission management and sampling protocol

The mission management is performed by a software module which objective is to provide the user with a platform that allows the definition of the processes required to perform a sampling mission and to monitor its state throughout the run time. To this end, this software module uses a map built by aerial images of the area of operations. The module is prepared to receive aerial images publicly available or that have been taken by unmanned aerial vehicles. The advantage of using the latter relates to the greater reliability of the information because it will be more updated than that provided for the first option. The maps can be manipulated by the user, with functions such as creating and editing routes that the mobile unit will have to follow, definition of sampling points and definition of points of interest to help the autonomous navigation (e.g. obstacles, water regions, etc.).

In addition to maps, this module includes a table where is displayed all the information related to the state of each sample (for example, if the collection has been successful or not, the GPS position of collection, date and time of collection and optionally an image of the location of collection).

The sampling protocol, given the extent of the estuarine area to explore, will apply a sampling procedure along transects. In a single sampling point for each transect will be collected 9-10 sediment colour (60 cm in depth and 6 cm of diameter). The existence of vegetation patches interspersed in the shallow muddy landscape, suggests defining separately transects for the two morphological types. The tangential drag to collect sea grass will be done exclusively in the areas in which they form a continuous cover, and will be performed over marginal transects in order to minimize the damage to sea grass meadow and other organisms dependent on them. The collection of bivalves will be done on grounds where the vegetation is scarce or absent. For this sampling stage, which involves from the beginning an unquantifiable uncertainty in the number of individuals collected, the drag retry limit is defined by the load volume supported on the robot's storage compartments. The first field tests will provide the data required to further recalibrate the sampling protocol.

### Diagnosis

The present invention includes a module dedicated to the fault diagnosis and prevention of errors. This module uses two main layers: data collection and data processing. The collection component is embedded in the remaining software modules so that each process or application is responsible for sending a message to the system with a regular cadence, carrying information related to its own operation state. This message contains at least a degree of severity which can range from 0 (normal operation) to 4 (critical failure) and a descriptive phrase of the fault origin (if any). Additionally, the message may contain measurable values acquired by internal sensors (e.g. temperature, consumption, frequency, etc.) in order to assist the processing layer and the operator to prevent errors or to create a failure recovery plan.

The processing layer receives and interprets the diagnostic messages described above and checks whether the reported values are within the optimal operating limits. If a fault is reported or some value approaches or exceeds the limit, the case is reported to the user through the graphic interface. This layer may also contain a set of rules so as to limit the operation of the system or of any particular component if it is found a potentially dangerous situation for safe operation thereof (for example, excessive temperature rise, radio signal degradation, etc.).

### Description of figures

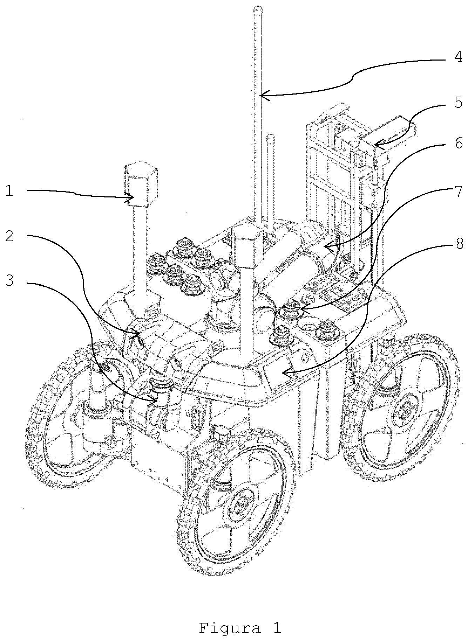

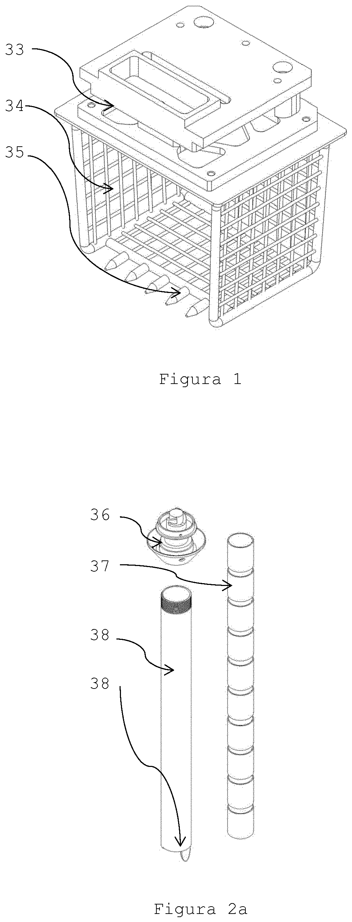

Figure 1 illustrates the mobile robot in its configuration for collecting soil samples by drilling, which includes an omnidirectional camera (1), a pair of cameras for stereoscopy (2), a laser scanner mounted on a variable slope unit (3), a pair of antennas for communications in radio frequency (4), a soil drilling apparatus (5), a robotic arm (6), a set of probes for soil collection and due compartments (7) and a monitor accessible from the outside of the robot (8).

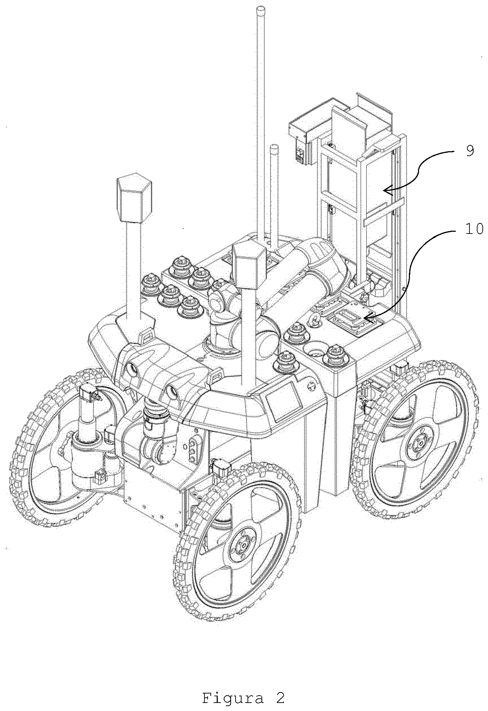

Figure 2 illustrates the mobile robot in its configuration for collecting biological samples by drag. This configuration differs from the previous one by presenting the collecting apparatus by drag (9) and a set of dredgers and respective compartments (10).

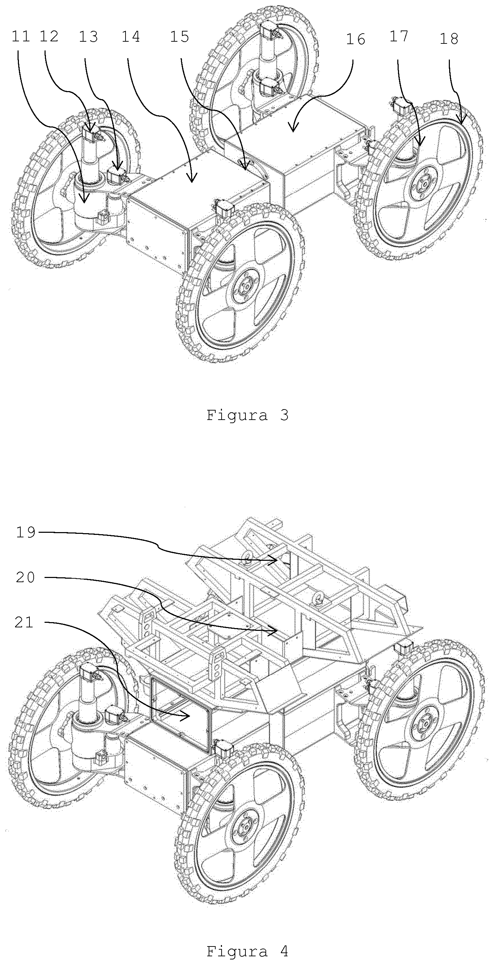

Figure 3 illustrates the base platform for the robot locomotion comprising two hermetically sealed compartments for batteries (14) and (16), connected by a passive **longitudinal** axis (15). The compartments serve to support the transmission blocks (11) responsible to transfer the motion of the driving motors (12) and steering (13) to the wheels (17) and (18).
Figure 4 illustrates the detail of the compartments for electronic components (20) and (21), as well as the tubular structure responsible for supporting the outer cover of the robot (19).

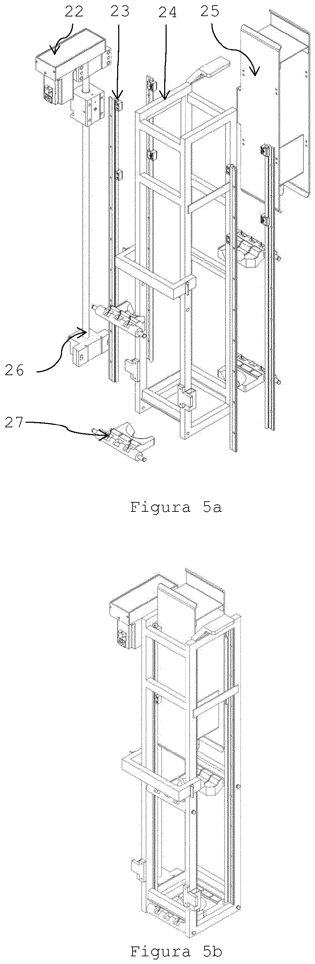

Figures 5A and 5B illustrate the detail of the soil drilling apparatus, comprising an electric motor (22) to actuate a spindle (26) which moves a support (25) laid on linear guides (23) in a tubular structure (24). The apparatus also comprises positioners (27) in order to guide the drilling tubes along its vertical displacement.

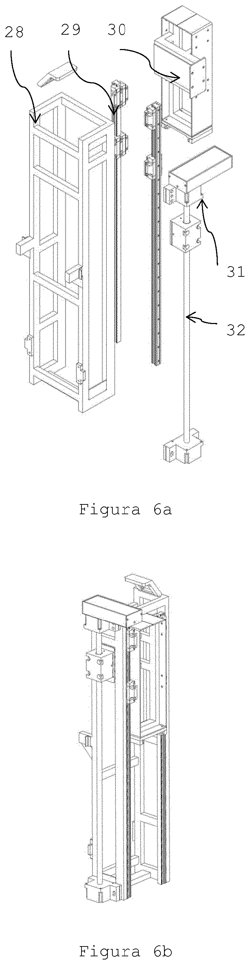

Figures 6A and 6B illustrate the detail of the sampling apparatus by drag, comprising an electric motor (31) to actuate a spindle (32) that moves a support (30) laid on linear guides (29) in a tubular structure (28).
Figure 7 illustrates a dredger comprising a quick release system (33), a containment net (34) and a set of spigots (35).

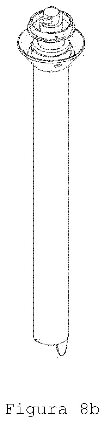

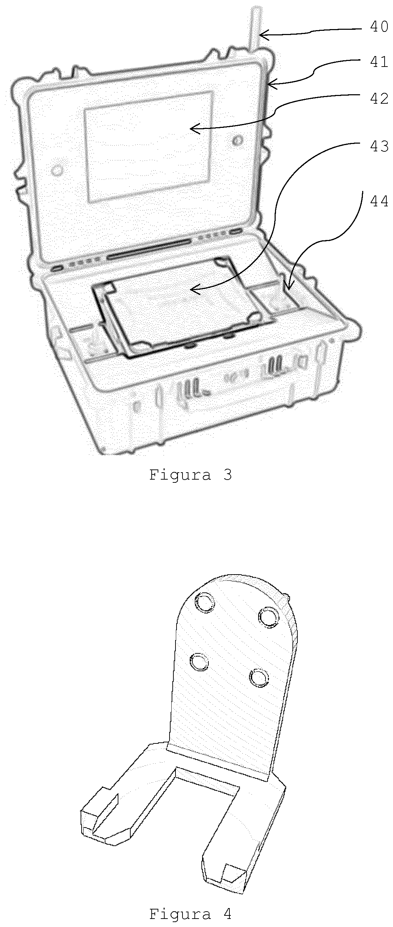

Figure 8 illustrates a probe comprising a quick release system (36), a set of inner rings (37) and an outer tube (38) with a drilling tip (39).
Figure 9 illustrates the portable remote control unit, comprising a hard carrying case (41) containing an antenna for communications by radiofrequency (40), a high brightness monitor (42), a laptop computer (43) and two joysticks (44) .
Figure 10 illustrates the claw attached to the robotic arm, responsible to capture and transport the sampling pipes/probes and dredgers.

## Claims

1. Mobile service robot capable of collecting biological and soil samples for environmental monitoring with at least four wheels, one anthropomorphic robotic arm (6) programmable with at least five degrees of freedom, a soil drilling apparatus (5), a drag apparatus **characterized in that**:
a) the at least four wheels include studded tires, actuated independently in drive and steering (17) and (18);
b) the soil drilling apparatus comprises a support structure, a table and linear guides ;
c) the drag apparatus comprises a support structure, a table and linear guides, an electric motor, a carriage, skids and receptacles ;
and **characterized in that** it comprises
d) a passive longitudinal axis (15);
e) at least a laser scanner (3);
f) one pair of antennas for communications in radio frequency (4) and a high-performance router connected to a switch;
g) a set of probes for soil collection and due compartments (7);
h) one monitor accessible from the outside of the robot (8) ;
i) two hermetically sealed compartments for batteries (14) (16), connected by the passive longitudinal axis (15) and two compartments for electronic components (20) (21);
j) transmission blocks (11) and driving motors (12);
k) at least one battery;
l) at least four serial ports and at least eight USB ports;
m) a global positioning unit with centimetre accuracy, an inertial measurement system consisting of gyroscopes and accelerometers and a mechanism to record odometry;
n) at least one pair of cameras with synchronizable shutters (2) and at least one high resolution camera (1);
o) a wireless remote control unit comprising a hard carrying case (41) containing an antenna for communications in radio frequency (40), a monitor (42), a laptop computer (43) and two joysticks (44), a video decoder over IP;
p) a control unit with analog joystick for movement control, selectors and locomotion modes of the mobile unit, an emergency stop button and a "dead man's" mechanism;
q) a graphic interface.

2. A robot according to claim 1, **characterized in that** the at least one high resolution camera is an omnidirectional camera (1) and the at least one pair of cameras is a pair of stereoscopic cameras (2);

3. A robot according to any of the previous claims, **characterized in that** it comprises at least one protocol conversion unit from FireWire to USB and includes at least one protocol conversion unit from CAN to USB.

4. A robot according to any of the previous claims, **characterized in that** the soil drilling apparatus comprises an electric motor (22) to actuate a spindle (26) that moves a support (25) laid on linear guides (23) in a tubular structure (24) that supports the outer cover of the robot (19); and positioners (27).

5. A robot according to any of the previous claims, **characterized in that** it comprises a sampling apparatus comprising an electric motor (31) to actuate a spindle (32) that moves the support (30) laid on linear guides (29) in a tubular structure (28).

6. A robot according to any of the previous claims, **characterized in that** the drag apparatus (9) has a dredger comprising a quick release system (33), a containment net (34) and a set of spigots (35) and compartments (10).

7. A robot according to any of the previous claims, **characterized in that** it has a drilling element consisting of a probe that comprises a quick release system (36), a set of inner rings (37) and an outer tube (38) with a drilling tip (39) and an hexahedral element open on one side and perforated in the others, with a quick release system (33) at the top.

## Patentansprüche

1. Mobiler Serviceroboter mit Fähigkeit zur Sammlung von biologischen und Bodenproben zur Umweltüberwachung, mit mindestens vier Rädern, einem anthropomorphischen Roboterarm (6), programmierbar mit mindestens fünf Freigheitsgraden, einem Bodenbohrungsgerät (5), einem Schleppgerät **dadurch gekennzeichnet, dass**:
a) die mindestens vier Räder Spikereifen enthalten, die unabhängig voneinander in Antrieb und Lenkung (17) und (18) betätigt werden;
b) das Bodenbohrungsgerät umfasst eine Stützstruktur, eine Tafel und Linearführungen;
c) das Schleppgerät umfasst eine Stützstruktur, eine Tafel und Linearführungen, einen Elektromotor, einen Wagen; Kufen und Behälter;
und **gekennzeichnet dadurch, dass** es folgendes umfasst
d) eine passive Längsachse (15);
e) mindestens einen Laserscanner (3);
f) ein Antennenpaar für Kommunikation in Funkfrequenz (4) und ein Hochleistungsrouter, der mit einem Schalter verbunden ist;
g) ein Sondenset für Bodensammlung und die jeweiligen Kammern (7);
h) einen Monitor, der von außen des Roboters (8) zugänglich ist;
i) zwei hermetisch verschlossene Kammern für Batterien (14) (16), die durch die passive Längsachse (15) und zwei Kammern für elektronische Bauteile (20) (21) verbunden sind;
j) Übertragungsblöcke (11) und Antriebsmotoren (12) ;
k) mindestens eine Batterie;
l) mindestens vier serielle Anschlüsse und mindestens acht USB Abschlüsse;
m) eine globale Positioniereinheit mit Zentimetergenauigkeit, ein Inertialmesssystem, welches aus Gyroskope und Beschleunigungsmessern besteht und ein Mechanismus um Odometrie aufzuzeichnen;
n) mindestens ein paar Kameras mit synchronisierbaren Kameraverschlüssen (2) und mindestens eine hochauflösende Kamera (1);
o) eine Funkfernbedienungseinheit mit einem Hartschalenkoffer (41), welcher eine Antenne für Kommunikation in Funkfrequenz (40), einen Monitor (42), einen Laptop-Computer (43) und zwei Steuerknüppel (44), einen IP-Videodecoder enthält;
p) eine Steuereinheit mit analogem Steuerknüppel für Bewegungssteuerung, Selektoren und Fortbewegungsmittel der mobilen Einheit, ein Nothaltknopf und ein "dead man's" Mechanismus;
q) eine Grafik-Schnittstelle.

2. Ein Roboter nach Anspruch 1, **gekennzeichnet dadurch, dass** bei diesem mindestens eine hochauflösende Kamera eine omnidirektionale Kamera (1) ist und bei diesem mindestens ein paar Kameras ein paar stereoskopische Kameras (2) sind;

3. Ein Roboter nach jedem der vorherigen Ansprüche, **dadurch gekennzeichnet, dass** er mindestens eine Protokollumsetzungseinheit von FireWire auf USB umfasst und mindestens eine Protokollumsetzungseinheit von CAN auf USB hat.

4. Ein Roboter nach jedem der vorherigen Ansprüche, **dadurch gekennzeichnet, dass** das Bodenbohrungsgerät einen Elektromotor, um eine Spindel (26) zu betätigen, welche eine auf Linearführungen (23) gelegte Stütze (25) bewegt, in einer Rohrstruktur (24), welche die Außenhülle des Roboters (19) stützt; und Positionierer (27) umfasst.

5. Ein Roboter nach jedem der vorherigen Ansprüche, **dadurch gekennzeichnet, dass** er ein Gerät zur Probenahme mit einem Elektromotor (31) umfasst, um eine Spindel (32) zu betätigen, welche die auf Linearführungen (29) gelegte Stütze (30) in einer Rohrstruktur (28) bewegt.

6. Ein Roboter nach jedem der vorherigen Ansprüche, **dadurch gekennzeichnet, dass** das Schleppgerät (9) einen Bagger hat, welcher ein Schnellkupplungssystem (33), ein Eindämmungsnetz (34) und eine Reihe von Zapfen (35) und Kammern (19) umfasst.

7. Ein Roboter nach jedem der vorherigen Ansprüche, **dadurch gekennzeichnet, dass** er ein Bohrungselement hat, welches aus einer Sonde besteht, welche ein Schnellkupplungssystem (36), eine Reihe von Innenringen (37) und ein Außenrohr (38) mit einer Bohrspitze (39) und ein sechsflächiges Element, welches auf einer Seite geöffnet ist und auf den anderen durchbohrt ist, mit einem Schnellkupplungssystem (33) auf der oberen Seite, umfasst.

## Revendications

1. Robot de service mobile capable de collecter des échantillons biologiques et de sols pour la surveillance de l'environnement ayant au moins quatre roues, un bras robotisé anthropomorphe (6) programmable avec au moins cinq degrés de liberté, un appareil de forage du sol (5) et un appareil de tirage, **caractérisé en ce que** :
a) les au moins quatre roues comprennent des pneus cloutés, actionnées indépendamment en traction et direction (17) et (18) ;
b) l'appareil de forage du sol comprend une structure de support, une table et des guides linéaires ;
c) l'appareil de tirage comprend une structure de support, une table et des guides linéaires, un moteur électrique, un chariot, des patins et des récipients ;
et **caractérisé en ce qu'**il comprend
d) un axe longitudinal passif (15) ;
e) au moins un scanner laser (3) ;
f) une paire d'antennes pour communications en radiofréquence (4) et un routeur à haute performance connecté à un commutateur ;
g) un ensemble de sondes pour la collecte des sols et les compartiments respectifs (7) ;
h) un moniteur acessible de l'extérieur du robot (8);
i) deux compartiments hermétiques pour batteries (14) (16), connectés par l'axe longitudinal passif (15) et deux compartiments pour composants électroniques (20) (21) ;
j) blocs de transmission (11) et moteurs d'entraînement (12) ;
k) au moins une batterie ;
l) au moins quatre ports série et au moins huit ports USB ;
m) une unité de positionnement mondial avec précision centimétrique, un système de mesure inertiel composé de gyroscopes et accéléromètres et un mécanisme pour enregistrer l'odométrie ;
n) au moins une paire de caméras avec des obturateurs synchronisables (2) et au moins une caméra à haute résolution (1) ;
o) unité de télécommande sans fil comprenant un boîtier dur (41) qui contient une antenne pour communications en radiofréquence (40), un moniteur (42), un ordinateur portable (43) et deux joysticks (44), un décodeur vidéo sur IP ;
p) unité de commande avec joystick analogique pour le contrôle du mouvement, sélécteurs et modes de locomotion de l'unité mobile, un bouton d'arrêt d'urgence et un mécanisme d'« homme mort » ;
q) une interface graphique.

2. Un robot selon la revendication 1, **caractérisé en ce que** la au moins une caméra à haute résolution est une caméra omnidirectionnelle (1) et la au moins une paire de caméras est une paire de caméras stéréoscopiques (2).

3. Un robot selon l'une quelconque des revendications précédentes, **caractérisé en ce qu'**il comprend au moins une unité de conversion de protocole FireWire en USB et comprend au moins une unité de conversion de protocole CAN en USB.

4. Un robot selon l'une quelconque des revendications précédentes, **caractérisé en ce que** l'appareil de forage du sol comprend un moteur électrique (22) pour actionner une tige (26) qui déplace un support (25) placé sur des guides linéaires (23) dans une structure tubulaire (24) qui soutient la couverture extérieure du robot (19) ; et des positionneurs (27).

5. Un robot selon l'une quelconque des revendications précédentes, **caractérisé en ce qu'**il comprend un appareil d'échantillonnage composé d'un moteur électrique (31) pour actionner une tige (32) qui déplace un support (30) placé sur des guides linéaires (29) dans une structure tubulaire (28).

6. Un robot selon l'une quelconque des revendications précédentes, **caractérisé en ce que** l'appareil de tirage (9) présente un drageur comprenant un système à dégagement rapide (33), un filet de confinement (34) et un ensemble d'ergots (35) et de compartiments.

7. Un robot selon l'une quelconque des revendications précédentes, **caractérisé en ce qu'**il présente un élément de forage composé d'une sonde comprenant un système à dégagement rapide (36), un ensemble d'anneaux intérieurs (37) et un tube extérieure (38) avec une pointe de foret (39) et un élément hexaédrique ouvert sur un côté et perforé sur les autres, avec un système à dégagement rapide (33) sur le haut.
